# EUROPÄISCHE PATENTSCHRIFT

(11) **EP 1 642 376 B1**
(45) Veröffentlichungstag und Bekanntmachung des Hinweises auf die Patenterteilung: **16.12.2009**
(21) Anmeldenummer: 04728510.1
(22) Anmeldetag: 21.04.2004
(51) Int. Cl.: H02K 3/52

(54) **VERSCHALTUNGSELEMENT FÜR EINE WICKLUNG EINER ELEKTRISCHEN MASCHINE**
CONNECTING ELEMENT FOR A WINDING OF AN ELECTRICAL MACHINE
ELEMENT DE CONNEXION POUR BOBINAGE D'UNE MACHINE ELECTRIQUE

(30) Priorität: 25.06.2003 DE 10328720
(43) Veröffentlichungstag der Anmeldung: 05.04.2006
(73) Patentinhaber: ROBERT BOSCH GMBH, 70442 Stuttgart (DE)
(72) Erfinder: MAURER, Erik, 77830 Buehlertal (DE)
(86) Internationale Anmeldenummer: PCT/DE2004/000826
(87) Internationale Veröffentlichungsnummer: WO 2005/011086

(56) Entgegenhaltungen:
- EP-A- 0 777 312
- EP-A- 1 184 957
- US-A1- 2003 090 166

## Beschreibung

### Stand der Technik

Die Erfindung geht aus von einem Verschaltungselement für eine aus Spulen mit jeweils zwei Spulenanschlüssen zusammengesetzte, mehrsträngige Wicklung einer elektrischen Maschine, insbesondere eines bürstenlosen Gleichstrommotors, nach dem Oberbegriff des Anspruchs 1.

Bei einem bekannten Verschaltungselement dieser Art (EP 1 062 720 B1) ist der Träger aus Isoliermaterial eine Trägerplatte, welche mittels einer Nabe zusammen mit einem als Blechpaket ausgeführten, die Wicklung tragenden Statorkörper auf einem Lagertragrohr befestigt ist, das seinerseits an einem Motorflansch befestigt ist. Die elektrischen Leiterbahnen zum Herstellen von Schaltverbindungen zwischen den Spulen sind als konzentrisch zu der Nabe auf der Trägerplatte befestigte Stromschienen ausgebildet, die als Stanzteilen hergestellt sind. Dabei ist eine erste Stromschiene mit von der Stromschiene abgewinkelten Laschen zur Bildung eines Stempunktes mit den Spulenenden aller Wicklungsstränge verbunden. Drei weitere Stromschienen sind um die erste Stromschiene konzentrisch auf der Trägerplatte befestigt, wobei deren Laschen zum Verbinden mit den Spulenanfängen angeordnet sind. Um Kreuzungspunkten zwischen den konzentrischen Schienen und den davon abstehenden Laschen zu vermeiden, sind die Laschen der zweiten Stromschiene mittels vertieft angeordneter Führungen in der Trägerplatte unter die dritte Stromschiene und die vierte Stromschiene und die Laschen der dritten Stromschiene mittels vertieft angeordneter Führungen unter die vierte Stromschiene hindurchgeführt. Um den Verschnitt bei der Herstellung der aus Stanzmaterial bestehenden Stromschienen in Grenzen zu halten, wird die erste und die dritte Stromschiene in einem ersten Stanzwerkzeug und die zweite und die vierte Stromschiene in einem zweiten Stanzwerkzeug in je einem Stanzvorgang hergestellt, wobei die zweite, dritte und vierte Stromschiene mit je einer Verbindungslasche für Anschlusslitzen versehen wird.

Bei einem bekannten Stator für Elektromotoren mit einem Statorblechpaket, Statorwicklungen und einer an einer Stirnseite des Statorblechpakets angeordnete Verschaltungsanordung (EP 0777 312 A) weist die Verschaltungsanordung ein tragendes Isolierteil mit konzentrischen, nutenförmigen Kammern und in den Kammern einliegende Verbindungsleitungen zur Verschaltung der Wicklungsdrahtenden der Statorwicklungen auf. Die aus Kupfer oder Messing bestehenden Verbindungsleitungen besitzen einen rechteckigen Querschnitt und sind hochkant in die Kammern eingesetzt. Sie können einerseits in Form von durchgehenden Ringen oder andererseits in Form von Streifen ausgebildet sein, wobei die zunächst geradlinigen Streifen in einem sich anschließenden Arbeitsgang in Anpassung an die Form der Kammern gebogen werden. Die Verbindungsleiter weisen an verschiedenen Stellen fahnenartige Anschlussfortsätze auf, die in axialer Richtung aus den Kammern herausragen und zum Anschluss der Wicklungsdrahtenden der Statorwicklungen und der Motoranschlussleitung dienen. Die Wicklungsdrahtenden sind außen an dem Isolierteil in einem Bogen vorbei- bzw. hinübergeführt - und mit den vom Statorblechpaket wegweisenden Anschlussfortsätzen elektrisch leitend verbunden, z.B. verlötet oder verschweißt.

### Vorteile der Erfindung

Das erfindungsgemäße Verschaltungselement mit dem Merkmalen des Anspruchs 1 hat den Vorteil, dass durch die Verschachtelung der hochkant gestellten Blechstreifen in dem Träger eine kompakte Bauweise des Verschaltungselements erreicht wird. Dies wiederum ermöglicht es, das Verschaltungselement mit einem gegenüber dem Außendurchmesser des Rotors der elektrischen Maschine größeren Innendurchmesser auszuführen, so dass der Rotor bei an dem Stator stirnseitig angesetztem Verschaltungselement von beiden Seiten her in den Stator eingeführt werden kann. Durch die große Zahl von Gleichteilen, d.h. Blechstreifen, die gleich geformt sind, wird die Zahl der für das Stanzen der Blechstreifen erforderlichen Stanzwerkzeuge minimiert, und zwar auf maximal drei beschränkt, und ergeben sich günstige Herstellkosten für die Stanzteile. Die Gleichteile lassen sich aufgrund ihrer einfachen, ebenen Formgebung in der Blechplatine sehr gut verschachteln, so dass beim Stanzen ein nur sehr geringer Blechverschnitt anfällt. Die Blechstreifen werden vorzugsweise aus Kupfer oder Kupferlegierungen gefertigt, wobei die Oberfläche verzinnt sein kann. Durch den zur Herstellung einer seriellen Spulenverbindung pro Wicklungsstrang der mehrsträngigen Wicklung erfolgenden Einsatz einer ersten Gruppe von gleichgeformten U-förmigen Blechteilen mit jeweils zwei Kontaktfahnen und deren Einsetzen in den Träger derart, dass die Kontaktfahnen für die einen Spulenanschlüsse, z.B. für die Spulenanfänge, längs des äußeren Rands des Trägers und die Kontaktfahnen für die anderen Spulenanschlüsse, z.B. den Spulenenden, längs des inneren Umfangs des Trägers angeordnet sind, nimmt das Aufschweißen der Spulenanschlüsse auf die Kontaktfahnen nur wenig Platz in Anspruch, so dass die Kompaktheit des Verschaltungselements beim Schweißen nicht hinderlich ist.

Durch die in den weiteren Ansprüchen 2 bis 10 aufgeführten Maßnahmen sind vorteilhafte Weiterbildungen und Verbesserungen des im Anspruch 1 angegebenen Verschaltungselements möglich.

Gemäß einer vorteilhaften Ausführungsform der Erfindung ist für die Anbindung der Wicklungsstränge der mehrsträngigen Wicklung an deren Wicklungsanschlüsse eine zweite Gruppe von gleichgeformten Blechstreifen in L-Form mit einer Kontaktfahne vorgesehen, die so in den Träger eingesetzt sind, dass alle Kontaktfahnen an dem gleichen Rand, z.B. den äußeren Rand, des Trägers liegen.

Für eine Sternpunktschaltung der Wicklungsstränge ist gemäß einer vorteilhaften Ausführungsform der Erfindung ein einziges Blechteil mit E-Form und drei Kontaktfahnen vorgesehen, das in den Träger so eingesetzt ist, dass die drei Kontaktfahnen an demjenigen Rand des Trägers liegen, der nicht mit den Kontaktfahnen der zweiten Gruppe belegt ist, beispielsweise an dem inneren Rand.

Gemäß einer vorteilhaften Ausführungsform der Erfindung wird die Zahl der gleichgeformten Blechstreifen der ersten Gruppe durch die um die Strangzahl reduzierte Spulenzahl der Wicklung und die Zahl der gleichgeformten Blechstreifen der zweiten Gruppe durch die Strangzahl der Wicklung festgelegt. Beispielhaft besitzt somit das Verschaltungselement für eine dreisträngige Wicklung in Sternschaltung mit drei Spulen pro Wicklungsstrang sechs gleichgeformte Blechsteifen der ersten Gruppe und drei gleichgeformte Blechstreifen der zweiten Gruppe und die gleiche Wicklung mit vier Spulen pro Wicklungsstrang neun gleichgeformte Blechstreifen der ersten Gruppe und ebenfalls drei gleichgeformte Blechstreifen der zweiten Gruppe.

Ein Stator für eine elektrische Maschine, insbesondere für einen bürstenlosen Gleichstrommotor, bei der das erfindungsgemäße Verschaltungselement eingesetzt ist, ist in den Ansprüchen 11 - 15 angegeben.

### Zeichnung

Die Erfindung ist anhand eines in der Zeichnung dargestellten Ausführungsbeispiels in der nachfolgenden Beschreibung näher erläutert. Es zeigen:
- Fig. 1: eine perspektivische Darstellung eines Verschaltungselements für eine dreisträngige Wicklung in Sternpunktschaltung mit drei Spulen pro Wicklungsphase,
- Fig. 2: eine Draufsicht des Verschaltungselements in Fig. 1,
- Fig. 3: eine Explosionsdarstellung des Verschaltungselements in Fig. 1,
- Fig. 4: eine perspektivische Darstellung eines Stators eines elektronisch kommutierten Gleichstrommotors mit einer dreisträngigen Wicklung mit drei Spulen pro Wicklungsstrang in Sternpunktschaltung und aufgesetztem Verschaltungselement gemäß Fig. 1 - 3,
- Fig. 5: ein Wickelschema der Wicklung im Stator gemäß Fig. 4.

### Beschreibung des Ausführungsbeispiels

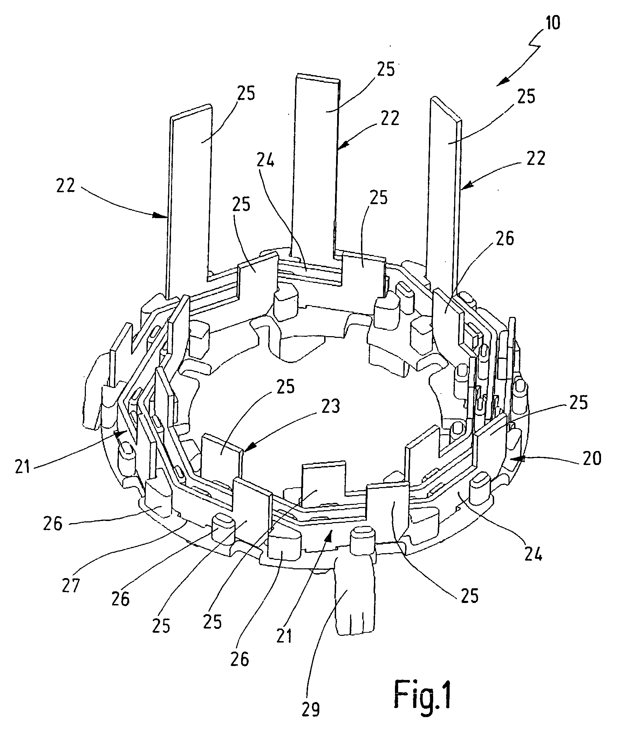

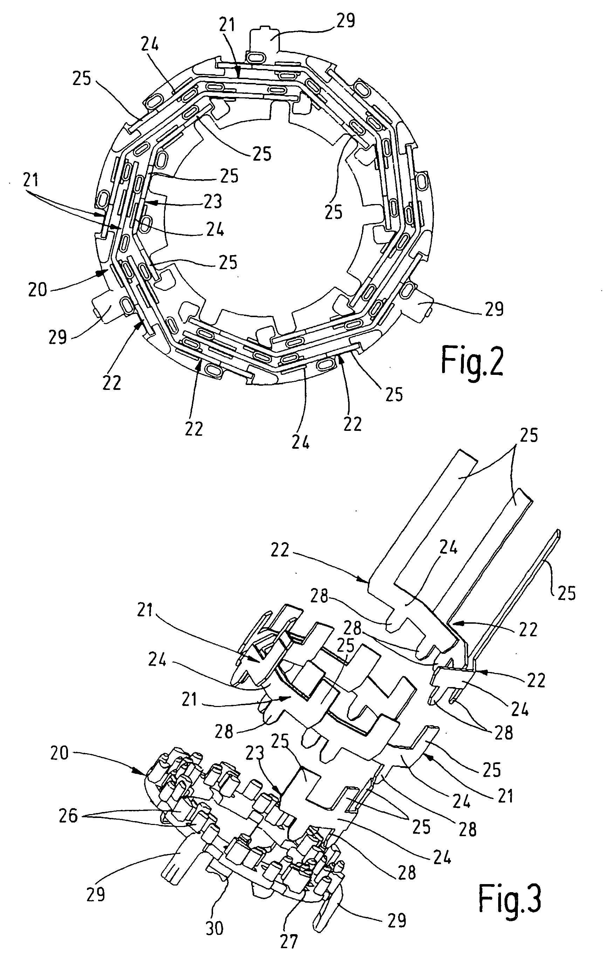

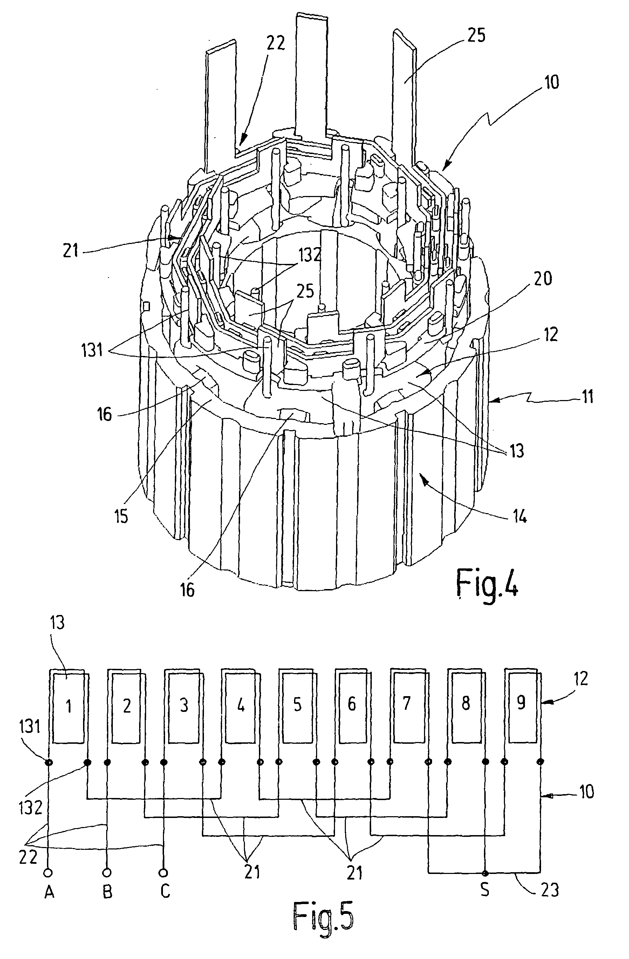

Das in Fig. 1 perspektivisch, in Fig. 2 in Draufsicht und in Fig. 3 als Explosionszeichnung dargestellte Verschaltungselement 10 dient zur elektrischen Verschaltung einer Wicklung 12, die in einem Stator 11 eines elektronisch kommutierten Motors (EC-Motors), auch bürstenloser Gleichstrommotor genannt, als Ausführungsbeispiel für eine allgemeine elektrische Maschine aufgenommenen ist. Die Wicklung 12 ist im Ausführungsbeispiel eine dreiphasige oder dreisträngige Wicklung mit drei Spulen 13 pro Wicklungsphase in Stempunktschaltung. Der in Fig. 4 perspektivisch dargestellte Stator 11 besitzt einen Statorkörper 14, der in bekannter Weise einen hohlzylindrischen Rückschlussring 15 und im Ausführungsbeispiel insgesamt neun davon radial abstehende Statorzähne 16 umfasst, die mit einem hier nicht dargestellten Rotor den Arbeitsluftspalt des Motors begrenzen. Auf jedem Statorzahn 16 ist eine ringförmige Spule 13 3 aufgewickelt, die zwei Spulenanschlüsse besitzt, von denen die Spulenanfänge mit 131 und die Spulenenden mit 132 bezeichnet sind. Alle Spulenanfänge 131 sind auf einem ersten Teilerkreis und alle Spulenenden 132 sind auf einem zweiten Teilerkreis mit gegenüber dem ersten Teilerkreis kleinerem Radius angeordnet. Die Teilerkreise können konzentrisch zueinander und koaxial zur Statorachse angeordnet sein. In Fig. 5 ist das Wickelschema der Wicklung 12 sowie die durch das Verschaltungselement 10 vorgenommene Verschaltung der Spulenanschlüsse 131, 132 dargestellt. Die Spulen 13 sind entsprechend ihrer Anordnung im Statorkörper 14 fortlaufend mit 1 bis 9 nummeriert, die Wicklungsanschlüsse der drei Wicklungsstränge sind mit A, B, C und der Sternpunkt mit S bezeichnet.

Das in Fig. 1 - 3 in verschiedenen Ansichten dargestellte Verschaltungselement 10 weist einen ringförmigen Träger 20 aus einem Isoliermaterial, vorzugsweise aus Kunststoff, auf, in den gestanzte Blechteile 21, 22, 23 hochkant radial hintereinander gestaffelt und in Umfangsrichtung zueinander versetzt eingesteckt sind. Die Blechteile 21, 22, 23 sind entsprechend ihrer Funktion für die serielle Verschaltung der Spulen 13 in den Wicklungssträngen, für die Anbindung der Wicklungsstränge an die Wicklungsanschlüsse A, B, C und zur Herstellung eines Sternpunkts S verschieden geformt, wobei die Bleichteile 21, 22, 23 so konzipiert sind, dass eine möglichst große Zahl von formgleichen Blechteilen, sog. Gleichteilen, entsteht. Die Blechteile 21, 22, 23 bestehen grundsätzlich aus einem Längsstreifen 24 und einem davon einstückig abgehenden Querstreifen, der eine Kontaktfahne 25 für die Spulenanschlüsse 131, 132 darstellt. Längsstreifen 24 und Querstreifen bzw. Kontaktfahnen 25 liegen in einer Ebene.

Zur Herstellung der seriellen Verschaltung der Spulen 13 in den Wicklungssträngen ist eine erste Gruppe von gleichgeformten Blechteilen 21 vorgesehen, die U-formig mit einem Längsstreifen 24 und zwei Kontaktfahnen 25 ausgebildet sind (Fig. 3). Diese Blechteile 21 sind so in den Träger 20 eingesetzt, dass die Kontaktfahnen 25 für die einen Spulenanschlüsse (Spulenanfänge 131) längs des äußeren Rands des Trägers 20 und die Kontaktfahnen 25 für die anderen Spulenanschlüsse (Spulenenden 132) längs des inneren Rands des Träger 20 angeordnet sind (Fig. 1 und 2). Für die Anbindung der Wicklungsstränge an die Wicklungsanschlüsse A, B, C, ist eine zweite Gruppe von gleichgeformten Blechteilen 22 vorgesehen, die L-förmig mit einem Längssteifen 24 und einer Kontaktfahnen 25 ausgebildet sind. Diese Blechteile 22 sind so in den Träger 20 eingesetzt, dass alle Kontaktfahnen 25 an dem äußeren Rand des Trägers 20 liegen. Für die Verschaltung der Wicklungsstränge zum Sternpunkt S ist ein weiteres Blechteil 23 vorgesehen, das E-formig mit einem Längsstreifen 24 und drei Kontaktfahnen 25 ausgebildet ist. Dieses Blechteil 23 ist so in den Träger 20 eingesetzt, dass alle Kontaktfahnen 25 am inneren Rand des Trägers 20 liegen, also an demjenigen Rand, der von den Kontaktfahnen 25 der Blechstreifen 22 nicht belegt ist. Die Zahl der Blechteile 21 der ersten Gruppe ist durch die um die Strangzahl reduzierte Gesamtzahl der Spulen 13 und die Zahl der Blechteile 22 der zweiten Gruppe durch die Strangzahl der Wicklung 12 festgelegt. Alle Längsstreifen 24 der Blechteile 21, 22, 23 sind stumpfwinklig abgeknickt, wobei die Zahl der Abknickstellen in einem Längsstreifen 24 der Blechteile 21 der um "1" reduzierten Spulenzahl pro Wicklungsstrang, die Zahl der Abknickstellen in dem Längsstreifen 24 des Blechteils 23 der um "1" reduzierten Strangzahl entspricht. Im Ausführungsbeispiel sind die Blechteile 21 zweimal, die Blechteile 22 einmal und das Blechteil 23 zweimal abgeknickt. Der Abstand der Abknickstellen in jedem Längsstreifen 24 voneinander entspricht dem Spulenabstand. Die Abknickstellen entstehen beim Einsetzen der Blechstreifen 21, 22, 23 in den Träger 20, können aber auch bereits nach dem Stanzen der Blechstreifen 21, 22, 23 vorgeben werden.

Für die Festlegung der Blechteile 21 - 23 im Träger 20 sind in dem Träger 20 einerseits Führungskörper 26 und andererseits Schlitze 27 sowie an den Blechteilen 21 - 23 jeweils zwei Laschen 28 vorgesehen. Die Laschen 28 liegen in der gleichen Ebene wie die Längsstreifen 24 und Kontaktfahnen 25 der Blechteile 21 - 23 und stehen einstückig auf der von den Kontaktfahnen 25 abgekehrten Unterkante der Längsstreifen 24 ab. Die Blechteile 21 - 23 werden mit ihren Längsstreifen 24 zwischen die Führungskörpern 26 eingesetzt und mit ihren Laschen 28 durch die Schlitze 27 hindurchgesteckt. Auf der Unterseite des Trägers 20 werden dann die Laschen 28 um ca. 90° umgebogen oder um ca. 45° verschränkt. Alternativ können die Blechteile 21 - 23 auch dadurch im Träger 20 festgesetzt werden, dass die Längsstreifen 24 beim Spritzen des Trägers 20 aus Kunststoff mit umspritzt werden. In diesem Fall können die Laschen 28 entfallen.

Auf der von den Anschlussfahnen 25 abgekehrten Unterseite des Trägers 20 sind Befestigungsmittel zum Festlegen des Trägers 20 am Stator 11 vorhanden. Wie insbesondere aus Fig. 1 und 3 zu erkennen ist, weisen die Befestigungsmittel in Achsrichtung sich erstreckende Haltefinger 29, 30 auf, von denen drei äquidistant am äußeren Rand des Trägers 20 und drei am inneren Rand des Trägers 20 angeordnet sind. Die Haltefinger 29, 30 übergreifen beim stirnseitigen Aufsetzen des Verschaltungselements 10 auf den Stator 11, und zwar auf die Wickelköpfe der Spulen 13, den Statorkörper 14 auf dessen Innen- und Außenseite und klemmen so das Verschaltungselement 10 auf dem Statorkörper 14 fest.

Nach dem lagerichtigen Aufsetzten des Verschaltungselements 10 auf den Stator 11 liegen die Spulenanfänge 131 der Spulen 13 auf den längs des äußeren Rands des Trägers 20 vorhandenen Kontaktfahnen 25 und die Spulenenden 132 der Spulen 13 auf den längs des inneren Rands des Trägers 20 vorhandenen Kontaktfahnen 25 auf. Nunmehr werden in einem Schweiß- oder Lötprozess alle Spulenanfänge 131 einerseits und alle Spulenenden 132 andererseits mit den Kontaktfahnen 25 verbunden. Der komplette Stator 11 mit verschalteter, dreisträngiger Wicklung in Sternpunktschaltung mit drei Spulen pro Wicklungsstrang und ist in Fig. 4 dargestellt.

Selbstverständlich ist es möglich, sowohl die Strangzahl der Wicklung 12 als auch die Zahl der seriell geschalteten Spulen 13 pro Wicklungsstrang zu ändern. Dabei bleiben grundsätzlich zwei Gruppen mit einer Mehrzahl von gleichgeformten Blechteilen 21, 22 sowie das eine Blechteil 23 zur Herstellung der Sternpunktverbindung erhalten. Lediglich die Anzahl der Blechteile innerhalb einer jeden Gruppe ändert sich mit Strangzahl und Spulen pro Wicklungsstrang. Die Realisierung des Verschaltungselements 10 mit dem Vorteil der kostengünstigen Fertigung erfordert mindestens zwei Wicklungsstränge und mindestens zwei Spulen pro Wicklungsstrang in der Wicklung 12.

Die Blechteile 21 - 23 sind bevorzugt aus Kupfer oder Kupferlegierungen hergestellt, so dass sie eine gute elektrische Leitfähigkeit besitzen. Die Oberfläche der Blechteile 21 - 23 kann verzinnt sein. Der Querschnitt der Blechteile 21 - 23 ist an die Stromstärke angepasst. Die abstehenden Kontaktfahnen 25 sind so angeordnet, dass der Zugang mittels Schweißelektroden an die Kontaktfahnen 25 gewährleistete ist. Die Geometrie der Kontaktfahnen 25, also ihre Breite und Höhe, ist an die Schweißparameter angepasst.

## Patentansprüche

1. Verschaltungselement für eine aus Spulen (13) mit jeweils zwei Spulenanschlüssen (131, 132) zusammengesetzte, mehrsträngige Wicklung (12) einer elektrischen Maschine, insbesondere eines bürstenlosen Gleichstrommotors, mit einem ringförmigen Träger (20) aus einem Isoliermaterial und mit im Träger (20) angeordneten Leiterbahnen zur elektrischen Verbindung der Spulen (13) und Wicklungsstränge, wobei die Leiterbahnen von Blechteilen (21, 22, 23) gebildet sind, die jeweils einen am Träger (20) festgelegten Längsstreifen (24) und mindestens einen davon einstückig abgehenden, eine Kontaktfahne (25) für die Spulenanschlüsse (131, 132) bildenden Querstreifen aufweisen und hochkant radial hintereinander gestaffelt in den Träger (20) eingesetzt sind, **dadurch gekennzeichnet, dass** für eine serielle Verschaltung der Spulen (13) in den Wicklungssträngen eine erste Gruppe von gleichgeformten Blechteilen (21) vorgesehen ist, die U-förmig mit zwei Anschlussfahnen (25) ausgebildet und in Umfangsrichtung zueinander versetzt so in den Träger (20) eingesetzt sind, dass die Kontaktfahnen (25) für die einen Spulenanschlüsse (131) längs des äußeren Rands des Trägers (20) und die Kontaktfahnen (25) für die anderen Spulenanschlüsse (132) längs des inneren Rands des Trägers (20) angeordnet sind.

2. Verschaltungselement nach Anspruch 1, **dadurch gekennzeichnet, dass** für eine Anbindung der Wicklungsstränge an Wicklungsanschlüssen (A, B, C) eine zweite Gruppe von gleichgeformten Blechteilen (22) vorgesehen ist, die L-förmig mit jeweils einer Kontaktfahne (25) ausgebildet und so in den Träger (20) eingesetzt sind, dass alle Kontaktfahnen (25) an einem Rand des Trägers (20) liegen.

3. Verschaltungselement nach Anspruch 2, **dadurch gekennzeichnet, dass** für eine Verschaltung der Wicklungsstränge in einem Sternpunkt (S) ein weiteres Blechteil (23) vorgesehen ist, das E-förmig mit drei Kontaktfahnen (25) ausgebildet und so in den Träger (20) eingesetzt ist, dass alle Kontaktfahnen (25) an demjenigen Rand des Trägers (20) liegen, der nicht von den Kontaktfahnen (25) der zweiten Gruppe von Blechteilen (22) belegt ist.

4. Verschaltungselement nach Anspruch 1 oder 2, **dadurch gekennzeichnet, dass** Längsstreifen (24) und Kontaktfahnen (25) in einer Ebene liegen.

5. Verschaltungselement nach einem der Ansprüche 1 bis 4, **dadurch gekennzeichnet, dass** die Zahl der Blechteile (21) der ersten Gruppe durch die um die Strangzahl reduzierte Gesamtzahl der Spulen (13) und die Zahl der Blechteile (22) der zweiten Gruppe durch die Strangzahl festgelegt ist.

6. Verschaltungselement nach einem der Ansprüche 1 bis 5, **dadurch gekennzeichnet, dass** die Längsstreifen (24) der Blechteile (21, 22, 23) stumpfwinklig abgeknickt sind und dass die Zahl der Abknickstellen in den Längsstreifen (24) der ersten Gruppe von Blechteilen (21) der um "1" reduzierten Spulenzahl pro Wicklungsstrang und die Zahl der Abknickstellen in dem weiteren Blechteil (23) der um "1" reduzierten Strangzahl entspricht und dass der Abstand der Abknickstellen voneinander durch den Spulenabstand bestimmt ist.

7. Verschaltungselement nach einem der Ansprüche 1 bis 6, **dadurch gekennzeichnet, dass** von den Längsstreifen (24) an der von den Kontaktfahnen (25) abgekehrten Unterkante Laschen (28) einstückig abstehen, die durch Schlitze (27) im Träger (20) hindurchgesteckt und auf der Unterseite des Trägers (20) umgebogen oder verdreht sind.

8. Verschaltungselement nach einem der Ansprüche 1 bis 7, **dadurch gekennzeichnet, dass** der Träger (20) Führungskörper (26) zum Einstecken der Längsstreifen (24) aufweist.

9. Verschaltungselement nach einem der Ansprüche 1 bis 6, **dadurch gekennzeichnet, dass** die Längsstreifen (24) der Blechteile (21, 22, 23) im Träger (20) durch Umspritzen des Trägermaterials festgelegt sind.

10. Verschaltungselement nach einem der Ansprüche 1 bis 9, **dadurch gekennzeichnet, dass** auf der von den Kontaktfahnen (25) abgekehrten Unterseite des Trägers (20) Befestigungsmittel zum Festlegen des Trägers (20) an der Maschine vorgesehen sind.

11. Stator für eine elektrische Maschine, insbesondere für einen bürstenlosen Gleichstrommotor, mit einem Statorkörper (14) und einer von diesem aufgenommenen, mehrsträngigen, aus Spulen (13) mit jeweils zwei Spulenanschlüssen (131, 132) zusammengesetzten Wicklung (12), **gekennzeichnet durch** ein an dem Statorkörper (14) gehaltenes, die Spulenanschlüsse (131, 132) verbindendes Verschaltungselement (10) nach einem der Ansprüche 1 bis 10.

12. Stator nach Anspruch 11, **dadurch gekennzeichnet, dass** das Verschaltungselement (10) an einer Stirnseite des Statorkörpers (14) auf Wickelköpfe der Wicklung (12) aufgesetzt ist und dass die am Träger (20) ausgebildeten Befestigungsmittel den Statorkörper (14) auf dessen Außen- und Innenseite übergreifende, sich axial erstreckende Haltefinger (29, 30) aufweisen.

13. Stator nach Anspruch 11 oder 12, **dadurch gekennzeichnet, dass** die die Spulenanfänge (131) bildenden Spulenanschlüsse und die die Spulenenden (132) bildenden Spulenanschlüsse der Spulen (13) auf jeweils einem Kreis liegen und dass die beiden Kreise verschiedene Radien aufweisen.

14. Stator nach Anspruch 13, **dadurch gekennzeichnet, dass** die Spulenanschlüsse (132) auf dem einen Kreis mit den am inneren Rand des Trägers (20) des Verschaltungselements (10) vorhandenen Kontaktfahnen (25) und die Spulenanschlüsse (131) auf dem anderen Kreis mit den am äußeren Rand des Trägers (20) des Verschaltungselements (10) vorhandenen Kontaktfahnen (25) verschweißt oder verlötet sind.

15. Stator nach einem der Ansprüche 11 bis 14, **dadurch gekennzeichnet, dass** die Spulen (13) als Ringspulen ausgebildet sind, die auf von einem Rückschlussring (15) des Statorkörpers (14) radial abstehenden Statorzähnen (16) aufgewickelt sind.

16. Elektrische Maschine mit einem Verschaltungselement (10) nach einem der Ansprüche 1 bis 10 oder einem Stator (11) nach einem der Ansprüche 11 bis 15.

## Claims

1. Interconnection element for a polyphase winding (12), which is composed of coils (13) with two coil connections (131, 132) in each case, of an electrical machine, in particular a brushless DC motor, having an annular support (20) comprising an insulating material and having conductor tracks which are arranged in the support (20), for electrically connecting the coils (13) and winding phases, wherein the conductor tracks are formed from sheet-metal parts (21, 22, 23) which each have a longitudinal strip (24) which is fixed to the support (20) and at least one transverse strip which projects integrally from the said longitudinal strip and forms a contact lug (25) for the coil connections (131, 132), and which are inserted into the support (20) upright and radially one behind the other in a stacked manner, **characterized in that** a first group of identically shaped sheet-metal parts (21) is provided for series interconnection of the coils (13) in the winding phases, the said sheet-metal parts being formed in a U-shaped manner with two connection lugs (25) and being inserted into the support (20) offset in relation to one another in the circumferential direction such that the contact lugs (25) for one of the coil connections (131) are arranged along the outer edge of the support (20) and the contact lugs (25) for the other coil connections (132) are arranged along the inner edge of the support (20).

2. Interconnection element according to Claim 1, **characterized in that** a second group of identically shaped sheet-metal parts (22) is provided for connecting the winding phases to winding connections (A, B, C), the said sheet-metal parts being formed in an L-shaped manner with one contact lug (25) in each case and being inserted into the support (20) such that all the contact lugs (25) lie on one edge of the support (20).

3. Interconnection element according to Claim 2, **characterized in that** a further sheet-metal part (23) is provided for interconnection of the winding phases at a star point (S), the said further sheet-metal part being formed in an E-shaped manner with three contact lugs (25) and being inserted into the support (20) such that all the contact lugs (25) lie on that edge of the support (20) which is not occupied by the contact lugs (25) of the second group of sheet-metal parts (22).

4. Interconnection element according to Claim 1 or 2, **characterized in that** longitudinal strips (24) and contact lugs (25) lie in one plane.

5. Interconnection element according to one of Claims 1 to 4, **characterized in that** the number of sheet-metal parts (21) of the first group is defined by the total number of coils (13) minus the number of phases, and the number of sheet-metal parts (22) of the second group is defined by the number of phases.

6. Interconnection element according to one of Claims 1 to 5, **characterized in that** the longitudinal strips (24) of the sheet-metal parts (21, 22, 23) are bent to form an obtuse angle, and **in that** the number of bend points in the longitudinal strips (24) of the first group of sheet-metal parts (21) corresponds to the number of coils per winding phase minus "1", and the number of bend points in the further sheet-metal part (23) corresponds to the number of phases minus "1", and **in that** the distance between the bend points is determined by the coil spacing.

7. Interconnection element according to one of Claims 1 to 6, **characterized in that** tabs (28) integrally project from the longitudinal strips (24) at the lower edge which is averted from the contact lugs (25), the said tabs being inserted through slots (27) in the support (20) and being bent or rotated on the lower face of the support (20).

8. Interconnection element according to one of Claims 1 to 7, **characterized in that** the support (20) has guide bodies (26) for insertion of the longitudinal strips (24).

9. Interconnection element according to one of Claims 1 to 6, **characterized in that** the longitudinal strips (24) of the sheet-metal parts (21, 22, 23) in the support (20) are secured by extrusion coating of the support material.

10. Interconnection element according to one of Claims 1 to 9, **characterized in that** fastening means for securing the support (20) to the machine are provided on the lower face of the support (20) which is averted from the contact lugs (25).

11. Stator for an electrical machine, in particular for a brushless DC motor, having a stator body (14) and a polyphase winding (12) which is accommodated by the said stator body and is composed of coils (13) which each have two coil connections (131, 132), **characterized by** an interconnection element (10) according to one of Claims 1 to 10 which is held on the stator body (14) and connects the coil connections (131, 132).

12. Stator according to Claim 11, **characterized in that** the interconnection element (10) is placed on an end face of the stator body (14) on winding heads of the winding (12), and **in that** the fastening means which are formed on the support (20) have axially extending holding fingers (29, 30) which engage over the outer face and inner face of the stator body (14).

13. Stator according to Claim 11 or 12, **characterized in that** the coil connections, of the coils (13), which form the coil starts (131) and the coil connections, of the coils (13), which form the coil ends (132) lie in a circle in each case, and **in that** the two circles have different radii.

14. Stator according to Claim 13, **characterized in that** the coil connections (132) in one circle are welded or soldered to the contact lugs (25) which are present at the inner edge of the support (20) of the interconnection element (10), and the coil connections (131) in the other circle are welded or soldered to the contact lugs (25) which are present on the outer edge of the support (20) of the interconnection element (10).

15. Stator according to one of Claims 11 to 14, **characterized in that** the coils (13) are in the form of annular coils which are wound onto stator teeth (16) which project radially from a magnetic return path ring (15) of the stator body (14).

16. Electrical machine having an interconnection element (10) according to one of Claims 1 to 10 or having a stator (11) according to one of Claims 11 to 15.

## Revendications

1. Elément de raccordement pour un enroulement (12) à plusieurs barreaux d'une machine électrique, l'enroulement étant constitué de bobines (13) qui présentent toutes deux deux bornes (131, 132) de raccordement de bobine, en particulier pour un moteur à courant continu sans balais,
avec un support annulaire (20) en un matériau isolant et des pistes conductrices, disposées dans le support (20), qui assurent le raccordement électrique des bobines (13) et des barreaux d'enroulement,
les pistes conductrices étant formées de pièces de tôle (21, 22, 23) qui présentent toutes un ruban longitudinal (24) fixé sur le support (20) et au moins un ruban transversal qui en déborde d'un seul tenant et qui forme un talon de contact (25) pour les bornes (131, 132) de raccordement de bobine, les pièces de tôle étant insérées debout les uns derrière les autres en piles radiales dans le support (20),
**caractérisé en ce que**
pour le raccordement en série des bobines (13), un premier groupe de pièces de tôle (21) de même forme est prévu dans les barreaux d'enroulement et
**en ce que** les pièces de tôle sont configurées en forme de U avec deux talons (25) de raccordement et sont insérées dans le support (20) avec un décalage mutuel dans la direction périphérique de telle sorte que les talons de contact (25) pour un des raccordements de bobine (131) sont disposés le long du bord extérieur du support (20) et les talons de contact (25) pour les autres raccordements de bobine (132) sont disposés le long du bord intérieur du support (20).

2. Elément de raccordement selon la revendication 1, **caractérisé en ce qu'**un deuxième groupe de pièces de tôle (22) de même forme est prévu pour relier les barreaux d'enroulement aux bornes de raccordement d'enroulement (A, B, C), ces pièces étant configurées en L, chacune avec un talon de contact (25), et étant insérées dans le support (20) de telle sorte que tous les talons de contact (25) soient situés sur un bord de support (20).

3. Elément de raccordement selon la revendication 2, **caractérisé en ce qu'**une autre pièce de tôle (23) qui est configurée en forme de E avec trois talons de contact (25) est prévue en un point d'étoile (S) pour le raccordement des barreaux d'enroulement et est insérée dans le support (20) de telle sorte que tous les talons de contact (25) sont situés sur le bord du support (20) qui n'est pas occupé par les talons de contact (25) du deuxième groupe de pièces de tôle (22).

4. Elément de raccordement selon les revendications 1 ou 2, **caractérisé en ce que** les rubans longitudinaux (24) et les talons de contact (25) sont situés dans le même plan.

5. Elément de racocrdement selon l'une des revendications 1 à 4, **caractérisé en ce que** le nombre des pièces de tôle (21) du premier groupe est défini par le nombre total des bobines (13) diminué du nombre de barreaux et **en ce que** le nombre des pièces de tôle (22) du deuxième groupe est défini par le nombre des barreaux.

6. Elément de raccordement selon l'une des revendications 1 à 5, **caractérisé en ce que** les rubans longitudinaux (24) des pièces de tôle (21, 22, 23) sont coudés à angle obtus et **en ce que** le nombre des points de coudage des rubans longitudinaux (24) du premier groupe de pièces de tôle (21) correspond au nombre de bobines de chaque barreau d'enroulement diminué de "1" , **en ce que** le nombre des points de coudage de l'autre pièce de tôle (23) correspond au nombre de barreaux diminué de "1" et **en ce que** la distance mutuelle entre les emplacements de coudage est définie par l'écart entre les bobines.

7. Elément de raccordement selon l'une des revendications 1 à 6, **caractérisé en ce que** des pattes (28) qui traversent des fentes (27) ménagées dans le support (20) et qui sont rabattues ou tournées sur le côté inférieur du support (20) débordent d'un seul tenant des rubans longitudinaux (24) sur le bord inférieur non tourné vers les talons de contact (25).

8. Elément de raccordement selon l'une des revendications 1 à 7, **caractérisé en ce que** le support (20) présente des corps de guidage (26) qui servent à insérer les rubans longitudinaux (24).

9. Elément de raccordement selon l'une des revendications 1 à 6, **caractérisé en ce que** les rubans longitudinaux (24) des pièces de tôle (21, 22, 23) sont fixés dans le support (20) en étant englobés dans le matériau de support injecté.

10. Elément de raccordement selon l'une des revendications 1 à 9, **caractérisé en ce que** des moyens de fixation qui fixent le support (20) sur la machine sont prévus sur le côté inférieur du support (20) non tourné vers les talons de contact (25).

11. Stator pour machine électrique, en particulier pour moteur à courant continu sans balais, qui présente un corps de stator (14) dans lequel est logé un enroulement (12) à plusieurs barreaux constitué de bobines (13) qui présentent toutes deux bornes (131, 132) de raccordement de bobine,
**caractérisé par**
un élément de raccordement (10) selon l'une des revendications 1 à 10, maintenu dans le corps de stator (14) et reliant les bornes (131, 132) de raccordement de bobine.

12. Stator selon la revendication 11, **caractérisé en ce que** l'élément de raccordement (10) est placé sur un côté frontal du corps de stator (14) sur les têtes d'enroulement de l'enroulement (12) et **en ce que** les moyens de fixation formés sur le support (20) présentent le corps de stator (14) sur leurs doigts de maintien (29, 30) qui chevauchent le côté intérieur et s'étendent axialement.

13. Stator selon les revendications 11 ou 12, **caractérisé en ce que** les bornes de raccordement de bobine qui forment les débuts (131) des bobines et les bornes de raccordement des bobines (13) qui forment les extrémités (132) des bobines sont situées sur des cercles respectifs et **en ce que** les deux cercles présentent des rayons différents.

14. Stator selon la revendication 13, **caractérisé en ce que** les bornes (132) de raccordement de bobine situées sur un des cercles sont soudées ou brasées sur les talons de contact (25) prévus sur le bord intérieur du support (20) de l'élément de raccordement (10) et **en ce que** les bornes (131) de raccordement de bobine situées sur l'autre cercle sont soudées ou brasées sur les talons de contact (25) prévus sur le bord extérieur du support (20) de l'élément de raccordement (10).

15. Stator selon l'une des revendications 11 à 14, **caractérisé en ce que** les bobines (13) sont configurées comme bobines annulaires qui sont enroulées sur des dents de stator (16) qui débordent radialement d'un anneau de fermeture (15) du corps (14) du stator.

16. Machine électrique qui présente un élément de raccordement (10) selon l'une des revendications 1 à 10 ou un stator (11) selon l'une des revendications 11 à 15.
